# EUROPEAN PATENT APPLICATION

(11) **EP 1 690 839 A1**
(43) Date of publication of application: **16.08.2006**
(21) Application number: 04818469.1
(22) Date of filing: 09.11.2004
(51) Int. Cl.: C03C 17/30, B32B 17/10, C09D 183/04, C09D 183/10

(54) **FLEXIBLE SUBSTRATE AND COATING LIQUID**

(30) Priority: 13.11.2003 JP 2003383645
(71) Applicant: Sumitomo Corporation, Tokyo 104-8610 (JP)
(72) Inventor: HIGUCHI, Akiji, c/o KRI, Inc., Kyoto-shi, Kyoto 600-8813 (JP); YAMADA, Kenji, Kanagawa 246-0032 (JP); SHINAGAWA, Rumi, c/o KRI, Inc., Kyoto-shi, Kyoto 600-8813 (JP); FUKUI, Terumi, Kanagawa 246-0032 (JP); TOKI, Motoyuki, c/o KRI, Inc., Kyoto-shi, Kyoto 600-8813 (JP)
(74) Representative: Johnson, Terence Leslie
(86) International application number: PCT/JP2004/016601
(87) International publication number: WO 2005/047200

(57) **Abstract**

A flexible substrate (10) of the present invention is formed of a stacked body which is constituted of an inorganic glass layer (110) and polymer layers (120A, 120B), wherein the polymer layers (120A, 120B) are formed of a polymer layer which contains polyorganosilsesquioxane as a main component thereof. Due to such a constitution, the flexible substrate (10) of the present invention possesses excellent heat resistance in addition to excellent flexibility, excellent impact resistance and excellent gas barrier properties.

## Description

### TECHNICAL FIELD

The present invention relates to a flexible substrate which may be preferably used for a flexible flat panel display. The present invention also relates to a coating liquid which may be preferably used for manufacturing such a flexible substrate.

### BACKGROUND ART

A light-weighted and foldable flexible flat panel display is attracting attentions as a future display. As a flexible substrate which may be used as a substrate for this flexible flat panel display, there have been proposed a flexible substrate made of an organic resin film and a flexible substrate formed of glass/plastic composite film which is formed by coating a glass film which constitutes a base substrate with a polymer layer (see patent documents 1, 2 and non-patent document 1, for example).

Among these flexible substrates, the flexible substrate which is made of the organic resin film has advantages that the flexible substrate is light-weighted and can obtain excellent flexibility and excellent impact resistance. However, such a flexible substrate has a drawback that the flexible substrate has poor gas barrier properties against gases such as vapor and oxygen, thus it has been difficult for the flexible substrate to protect inner elements.
To the contrary, the flexible substrate formed of the glass/plastic composite film uses the glass film as the base substrate and hence, the flexible substrate can obtain excellent gas barrier properties in the same manner as a conventional glass substrate and, at the same time, the glass film is covered with the polymer layer and hence, the flexible substrate can obtain excellent flexibility and excellent impact resistance. Here, in this specification, flexibility means a property which allows the flexible substrate to be freely curved or bent.

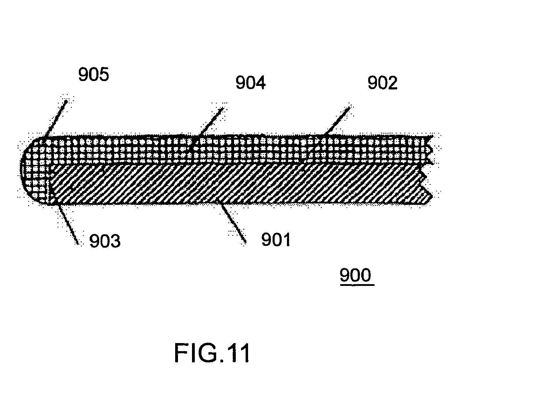

Fig. 11 is a view which shows the structure of the conventional flexible substrate which is formed of glass/plastic composite film disclosed in patent document 2. This flexible substrate 900 is, for example, formed of a glass/plastic composite film having the laminated structure which is constituted of a glass film 901 having a thickness of 10µm to 100µm and a polymer layer 904 having a thickness of 2µm to 50µm, for example, and being covered with the glass film 901.

According to this flexible substrate 900, since the glass film 901 is covered with the polymer layer 904, the flexible substrate 900 may obtain excellent flexibility (the limit radius of curvature immediately before the rupture being 12mm) and excellent impact resistance which the conventional glass substrate can hardly obtain. Further, according to this flexible substrate 900, since the flexible substrate 900 uses the glass film 901 as the base substrate, the flexible substrate 900 may obtain excellent gas barrier properties in the same manner as the conventional glass substrate. That is, this flexible substrate 900 is an excellent substrate which possesses excellent flexibility, excellent impact resistance and excellent gas barrier properties in combination (see non-patent document 1).

Patent document 1: Japanese Laid-Open Patent Publication No. Hei4(1992)-235527 (Fig. 1)
Patent document 2: Japan Unexamined Patent Publication under PCT No. 2002-534305 (Fig. 1)
Non-Patent Document 1: SID02 Digest, Session 6. 3, page 53 to 55, Title, "Thin Glass-Polymer Systems as Flexible Substrates for Displays" (Table 1)

### DISCLOSURE OF THE INVENTION

### PROBLEMS THAT THE INVENTION IS TO SOLVE

However, the heat resistance of the above-mentioned flexible substrate 900 is around 130°C in case the flexible substrate is used for several hours and around 200°C in case the flexible substrate is used for several minutes (see patent document 2). Therefore, there has been a drawback that the heating resistance is too low either to form low-resistance transparent electrodes or to form active elements as TFTs or the like on the flexible substrate. That is, in the step of forming the low-resistance transparent electrodes or in the step of forming the active elements as TFTs or the like, at least a temperature of 300°C to 350°C is applied to the flexible substrate and hence, the heat resistance of the above-mentioned flexible substrate 900 is too low.

The present invention has been made to overcome the above-mentioned drawback and it is an object of the present invention to provide a flexible substrate having excellent heat resistance in addition to excellent flexibility, excellent impact resistance, and excellent gas barrier properties. Further, it is another object of the present invention to provide a coating liquid which may be preferably used for manufacturing such an excellent flexible substrate and the like.

### MEANS FOR SOLVING THE PROBLEM

The inventors of the present invention have continued extensive studies to achieve the above-mentioned objects and, as a result, have discovered that by using a polymer layer which contains polyorganosilsesquioxane as a main component as a polymer layer for imparting flexibility to an inorganic glass layer, a flexible substrate can obtain excellent heat resistance in addition to excellent flexibility, excellent impact resistance and excellent gas barrier properties, and have arrived at the present invention based on such finding.

The flexible substrate according to the present invention is characterized by being formed of a stacked body which is constituted of an inorganic glass layer and a polymer layer which contains polyorganosilsesquioxane as a main component.

In this manner, the flexible substrate of the present invention uses the polymer layer which contains polyorganosilsesquioxane as the main component and exhibits excellent heat resistance as the polymer layer for imparting flexibility to the inorganic glass layer. Accordingly, different from a case in which the flexible substrate uses a polymer layer which is made of an organic resin as the polymer layer for imparting flexibility to the inorganic glass layer, the flexible substrate of the present invention can obtain excellent heat resistance. The reason that polyorganosilsesquioxane exhibits excellent heat resistance lies in that polyorganosilsesquioxane is a metal-oxide type polymer having the skeleton structure in which respective silicon atoms are linked to each other by way of an oxygen atom.

Further, according to the flexible substrate of the present invention, the flexible substrate has the structure formed by stacking the polymer layer which contains polyorganosilsesquioxane as the main component and exhibits excellent flexibility on the inorganic glass layer and hence, the flexible substrate can obtain excellent flexibility and excellent impact resistance. The reason that polyorganosilsesquioxane exhibits excellent flexibility lies in that polyorganosilsesquioxane has the flexible skeleton structure in which silicon atoms are linked to each other two-dimensionally by way of an oxygen atom different from the skeleton structure in which silicon atoms are firmly linked to each other in a three-dimensional meshed state by way of an oxygen atom. Due to such structure, even when a stress and an impact force are applied to the flexible substrate by folding the flexible substrate, the flexible substrate can flexibly absorb these forces.

Still further, according to the flexible substrate of the present invention, the flexible substrate uses the inorganic glass layer which originally possesses excellent gas barrier properties as the base substrate and hence, the flexible substrate can obtain excellent gas barrier properties.

Due to such a constitution, the flexible substrate according to the present invention is formed into a flexible substrate which possesses excellent heat resistance in addition to excellent flexibility, excellent impact resistance and excellent gas barrier properties.

Here, polyorganosilsesquioxane is the metal-oxide polymer which has the flexible skeleton structure in which the silicon atoms are linked to each other in the two-dimensional manner by way of the oxygen atom as described above. Since polyorganosilsesquioxane largely differs from a silicone resin and silica glass which also constitute the same silicon oxide in structure and physical properties, it is possible to distinguish polyorganosilsesquioxane from the silicone resin and silica glass using an infrared absorption spectrum, an ultraviolet visible absorption spectrum, an NMR, a DSC and other analytical methods.

In the flexible substrate according to the present invention, it is preferable that the above-mentioned polymer layer is a polymer layer which is manufactured by applying a coating liquid which contains polyorganosilsesquioxane as a main component to the above-mentioned inorganic glass layer and, thereafter, applying drying and heat treatment to the coating liquid.
Due to such a constitution, by adjusting the viscosity of the coating liquid, a coating method or the like, it may be possible to easily control a thickness of the polymer layer. Further, the constitution facilitates the addition of components other than polyorganosilsesquioxane into the coating liquid.
The coating liquid may be produced by dissolving polyorganosilsesquioxane in water or in an organic solvent.

In the flexible substrate according to the present invention, a molecular weight of polyorganosilsesquioxane which is contained in the coating liquid is not particularly limited. However, to obtain a polymer layer which possesses excellent flexibility and excellent heat-resistance, it is preferable that the molecular weight of polyorganosilsesquioxane is set to a value which falls within a range of 1000 to 100000 as a weight average molecular weight (Mw) in polystyrene conversion, and it is more preferable that the molecular weight of polyorganosilsesquioxane is set to a value which falls within a range of 4500 to 25000 as a weight average molecular weight (Mw) in polystyrene conversion.

The reason is that when the weight average molecular weight (Mw) of polyorganosilsesquioxane which is contained in the coating liquid in polystyrene conversion is less than 4500 (particularly less than 1000), the polymer layer may cause cracks therein in case the flexible substrate is subject to heat treatment under a condition that the heating temperature is close to 350°C. The reason why the polymer layer may cause cracks therein when the weight average molecular weight (Mw) of polyorganosilsesquioxane which is contained in the coating liquid in polystyrene conversion is less than 4500 (particularly less than 1000) is that a relatively large amount of oligomers which has a low molecular weight is contained in the polymer layer or the polymer layer per se has a low strength and hence, these oligomers are subject to a condensation reaction to each other in the process of heat treatment whereby the polymer layer largely contracts.

On the other hand, when the weight average molecular weight (Mw) of polyorganosilsesquioxane which is contained in the coating liquid exceeds 25000 (particularly over 100000) in polystyrene conversion, the solubility of the coating liquid with respect to the solvent becomes low and hence, the formation of the polymer layer by applying the coating liquid which contains polyorganosilsesquioxane to the inorganic glass layer becomes difficult.

In the flexible substrate according to the present invention, it is preferable that a ratio of an absorption intensity of an absorption band based on a Si-OH bond which is observed in a region ranging from 830cm⁻¹ to 930cm⁻¹ with respect to an absorption intensity of an absorption band having a largest absorbing ability among absorption bands based on a Si-O bond observed in a region ranging from 1000cm⁻¹ to 1200cm⁻¹ of an infrared absorption spectrum of polyorganosilsesquioxane which is contained in the coating liquid (hereinafter referred to as "an IR intensity ratio") falls within a range of 0.01 to 0.2.

This is because that when the IR intensity ratio of polyorganosilsesquioxane which is contained in the coating liquid exceeds 0.2, when the flexible substrate is subject to heat treatment under a condition of a temperature close to 350°C, the polymer layer may cause cracks therein. That is, the reason why the polymer layer causes cracks therein when the IR intensity ratio exceeds 0.2 is assumed that when the IR intensity ratio exceeds 0.2, the polymer layer contains a relatively large amount of silanol groups and hence, a relatively vigorous condensation reaction occurs between silanol groups to each other in the process of heat treatment and, at the same time, a strength of the polymer layer per se is lowered and, as a result, the polymer layer largely contracts.

On the other hand, when the IR intensity ratio of polyorganosilsesquioxane which is contained in the coating liquid is less than 0.01, a cross-linking reaction between polymers in the polymer layer becomes insufficient even when the heat treatment is applied to the coating liquid and hence, a mechanical strength and chemical resistance of the polymer layer are lowered.

In the flexible substrate according to the present invention, it is preferable that polyorganosilsesquioxane which is contained in the above-mentioned coating liquid is ladder-type polyorganosilsesquioxane.

As polyorganosilsesquioxane, ladder-type polyorganosilsesquioxane and cage-type polyorganosilsesquioxane are known. In the flexible substrate according to the present invention, either one of these polyorganosilsesquioxane may be used. However, the use of ladder-type polyorganosilsesquioxane is particularly preferable.
This is because that cage-type polyorganosilsesquioxane is a relatively small molecule having the skeleton structure in which silicon atoms are linked to each other in a cage-shape by way of an oxygen atom. In order to make this polyorganosilsesquioxane into a polymer, it is necessary to introduce a special organic substituent into a monomer. In this case, due to the introduction of the organic substituent into the monomer, heat resistance of cage-type polyorganosilsesquioxane is liable to be lowered. Further, the solubility of cage-type polyorganosilsesquioxane to a solvent is not so high and hence, it is not so easy to produce a polymer layer by applying a coating liquid which contains cage-type polyorganosilsesquioxane to the inorganic glass layer.

To the contrary, ladder-type polyorganosilsesquioxane is a metal-oxide polymer which has the skeleton structure in which silicon atoms are liked to each other by way of an oxygen atom two-dimensionally like a ladder. Due to such structure, in ladder-type polyorganosilsesquioxane, the formation of the skeleton structure does not require the introduction of a special organic substituent and hence, there is no lowering of the heat-resistance of ladder-type polyorganosilsesquioxane attributed to the introduction of the organic substituent. Further, the ladder-type polyorganosilsesquioxane exhibits high solubility to a solvent and hence, it is easy to produce a polymer layer by applying a coating liquid which contains ladder-type polyorganosilsesquioxane to the inorganic glass layer.

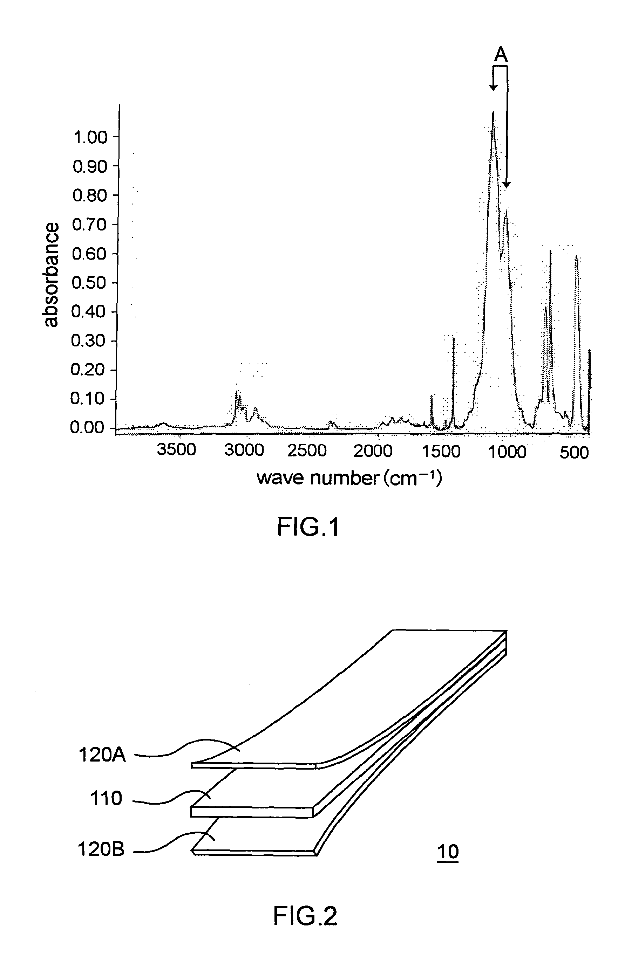

The presence of ladder-type polyorganosilsesquioxane may be confirmed by measuring an infrared absorption spectrum thereof. Fig. 1 is a view showing an infrared absorption spectrum of ladder-type polyorganosilsesquioxane (in a powdery state). Silicon oxide polymer exhibits an absorption band thereof which is assigned to the stretching vibration of Si-O in a wave number region in the vicinity of 1100cm⁻¹, while ladder-type polyorganosilsesquioxane is characterized in that, as shown in Fig. 1, this absorption band is divided in two (indicated by A in Fig. 1).
The reason is assumed that ladder-type polyorganosilsesquioxane has two Si-O bonds under different circumstances (a so-called Si-O bond in a longitudinal direction of the ladder and a so-called Si-O bond in a crosspiece direction of the ladder) and these Si-O bonds are vibrated with frequencies different from each other.

In the flexible substrate according to the present invention, as a raw material of polyorganosilsesquioxane which is contained in the coating liquid, various silicon-containing alkoxides may be preferably used. When these silicon-containing alkoxides are trifunctional, these silicon-containing alkoxides may be used in a single body or in combination. Further, when these silicon-containing alkoxides are tetrafunctional, bifunctional or monofunctional, these silicon-containing alkoxides may be used in combination or these silicon-containing alkoxides may be used in combination with a trifunctional silicon-containing alkoxide.

As tetrafunctional silicon-containing alkoxide, tetraalkoxysilane such as tetramethoxysilane and tetraethoxysilane may be preferably used.

Further, as the trifunctional silicon-containing alkoxide, aryltrialkoxysilane such as phenyltrimethoxysilane or phenyltriethoxysilane; or alkyltrialkoxysilane such as methyltrimethoxysilane, ethyltrimethoxysilane, 3-mercaptopropyltrimethoxysilane, methyltriethoxysilane or ethyltriethoxysilane may be preferably used.

Further, as the bifunctional silicon-containing alkoxide, arylalkyldialkoxysilane such as phenylmethyldimethoxysilane, phenylethyldimethoxysilane, phenylmethyldiethoxysilane or phenylethyldiethoxy ilane; or dialkyldialkoxysilane such as dimethyldimethoxysilane, diethyldimethoxysilane, dimethyldiethoxysilane and diethyldiethoxysilane may be preferably used.

Further, as the monofunctional silicon-containing alkoxide, diarylalkylalkoxysilane or aryldialkylalkoxysilane such as diphenylmethylmethoxysilane, phenyldimethylmethoxysilane, diphenylethylmethoxysilane, phenyldiethylmethoxysilane, diphenylmethylethoxysilane, phenyldimethylethoxysilane, diphenylethylethoxysilane or phenyldiethylethoxysilane; triarylalkoxysilane such as triphenylmethoxysilane and triphenylethoxysilane; or trialkylalkoxysilane such as trimethylmethoxysilane, triethylmethoxysilane, trimethylethoxysilane or triethylethoxysilane may be preferably used.

In the flexible substrate according to the present invention, it is preferable that polyorganosilsesquioxane which is contained in the above-mentioned coating liquid is, among the above-mentioned silicon-containing alkoxides, a silicon oxide polymer which is obtained by applying hydrolysis and dehydration condensation to a solution which contains at least trifunctional silicon-containing alkoxide (a silicon-containing alkoxide solution).
Due to such a constitution, it is possible to stably form polyorganosilsesquioxane having the skeleton structure in which silicon atoms are linked to each other two-dimensionally by way of an oxygen atom in the polymer thus realizing the stable acquisition of the polymer layer having excellent flexibility and excellent heat resistance.

In this case, as the above-mentioned silicon-containing alkoxide solution, it may be more preferable to use a solution which contains trifunctional silicon-containing alkoxyde as a main component.
Due to such a constitution, it is possible to further stably form polyorganosilsesquioxane having the skeleton structure in which the silicon atoms are linked to each other two-dimensionally by way of the oxygen atom in the polymer thus realizing the further stable acquisition of the polymer layer having excellent flexibility and excellent heat resistance.
Here, in this specification, "which contains the trifunctional silicon-containing alkoxide as a main component" means that the silicon-containing alkoxide solution contains 50 weight% or more of trifunctional silicon-containing alkoxide out of the silicon-containing alkoxides.

In the flexible substrate according to the present invention, it is preferable that polyorganosilsesquioxane which is contained in the above-mentioned coating liquid is a silicon oxide polymer having at least one substituent out of an aryl group, an alkyl group and a substituent alkyl group.
Accordingly, due to the presence of these organic substituents, it is possible to appropriately adjust degrees of flexibility and heat resistance of the polyorganosilsesquioxane, and eventually, the degrees of flexibility, impact resistance and heat resistance of the flexible substrate.

In the flexible substrate according to the present invention, it is preferable that the above-mentioned coating liquid is a coating liquid which further contains an organic resin and/or an organic low-molecular compound in addition to above-mentioned polyorganosilsesquioxane.
Due to such a constitution, it is possible to impart various favorable properties (desired flexibility, impact resistance, heat resistance, light resistance, weatherability, chemical resistance, flatness, layer thickness, a mechanical strength and the like) to the polymer layer.

When the polymer layer further contains the organic resin in addition to polyorganosilsesquioxane, the coating liquid may further contain, as components other than polyorganosilsesquioxane, a known organic resin such as an acrylic resin, an epoxy resin, an urethane resin, a melamine resin, a polyimide resin, a polycarbonate resin, a polyacetal resin, a polyvinyl butyral resin or a polyvinyl pyrrolidone resin. It may be preferable that these organic resins are contained to an extent which allows polyorganosilsesquioxane to become a main component of the polymer layer (content: 50weight% or more).
By allowing the polymer layer to contain such organic resins, it is possible to enhance flexibility and impact resistance of the flexible substrate while holding heat resistance of the flexible substrate.

When the polymer layer further contains an organic low molecular compound in addition to polyorganosilsesquioxane, as such an organic low molecular compound, various kinds of organic low molecular compounds may be used so as to impart various desirable properties (desired flexibility, impact resistance, heat resistance, light resistance, weather resistance, chemical resistance, flatness, layer thickness, mechanical strength or the like) to the polymer layer.

As such an organic low molecular compound, it is possible to use, for example, a free-radical polymerization initiator such as a triazine initiator or a benzophenone initiator, a photo acid polymerization initiator such as an onium salt, an initiator formed of an organic peroxide compound or the like. In this case, as the polyorganosilsesquioxane, polyorganosilsesquioxane which includes a cross-link functional group having a predetermined density may be preferably used. Due to such a constitution, it is possible to properly combine side chains of polyorganosilsesquioxane each other while holding the flexible skeleton structure of polyorganosilsesquioxane and hence, it is possible to enhance a mechanical strength of the polymer layer without reducing flexibility of the polymer layer.

In the flexible substrate according to the present invention, it is preferable that the above-mentioned coating liquid may further include, in addition to polyorganosilsesquioxane, a silicone resin.
Due to such a constitution, the silicone resin plays a role of a binder and hence, it is possible to impart sufficient viscosity to the coating liquid. Accordingly, it is possible to allow the polymer layer to have a desired thickness and hence, flexibility and impact resistance of the flexible substrate may be enhanced. In this case, when the polymer layer is formed using only silicone resin, only low heat resistance may be obtained. However, when the coating liquid which contains the silicone resin in addition to polyorganosilsesquioxane is used, the flexible substrate can obtain excellent heat resistance.

In the flexible substrate according to the present invention, it is also preferable that the above-mentioned coating liquid is a coating liquid which contains colloidal silica in addition to polyorganosilsesquioxane.
Due to such a constitution, in addition to normal cross-linking due to polyorganosilsesquioxane, cross-linking due to colloidal silica is generated in the polymer layer and hence, it is possible to further enhance heat resistance, a mechanical strength and chemical resistance of the polymer layer.

In the flexible substrate according to the present invention, as a method for applying the above-mentioned polymer solution to the inorganic glass layer, a known wet applying method such as a spin coating method (a spinner method), a dipping and pull-up coating method (a dipping method) , a spray coating method and a die coating method may be used.

In the flexible substrate according to the present invention, a film thickness of the polymer layer which includes polyorganosilsesquioxane as a main component is not particularly limited. However, to obtain excellent flexibility and excellent impact resistance, the film thickness of the polymer layer may preferably be set to a value which falls within a range of 0.5µm to 100µm and, more preferably, to a value which falls within a range of 1µm to 60µm and, still more preferably, to a value which falls within a range of 2µm to 30µm.

In the flexible substrate according to the present invention, as a material of the inorganic glass layer, various glass such as borosilicate glass, borosilicate glass which does not contain alkaline component and the other glass may be used.
In the flexible substrate according to the present invention, a thickness of the inorganic glass layer may preferably be set to a value which falls within a range of 1µm to 300µm, more preferably to 5µm to 200µm and, still more preferably to 10µm to 100µm.

In the flexible substrate according to the present invention, the polymer layer may be formed on one surface of the inorganic glass layer or may be formed on both sides of the inorganic glass layer.
When the polymer layer is formed on both sides of the inorganic glass layer, flexibility and impact resistance of the flexible substrate may be further enhanced.

It is preferable that the flexible substrate according to the present invention may be a flexible substrate having heat resistance against a temperature of 350°C or more.
Due to such a constitution, in a process of manufacturing a flexible flat panel display, transparent electrodes having low resistance or active elements such as TFTs may be formed on the flexible substrate and hence, the quality of the flexible flat panel display may be enhanced.

The flexible substrate according to the present invention may preferably be a flexible substrate which exhibits, even after performing the heat treatment at a temperature of 350°C in air, the light transmittance of equal to or more than 90% at a wavelength region ranging from 400nm to 800nm.
Due to such a constitution, in the process of manufacturing the flexible flat panel display, even when transparent electrodes having low resistance or active elements such as TFTs are formed on the flexible substrate, the flexible substrate can hold high light transmittance without lowering the light transmittance thereof and hence, there is no possibility that display quality of the flexible flat panel display is lowered.

The flexible substrate according to the present invention is preferably a flexible substrate which, after performing the heat treatment at a temperature of 350°C in air, is not broken even when an impact of 0.3mNm is applied to the flexible substrate in the vertical direction.
Due to such a constitution, in the process of manufacturing the flexible flat panel display, even when transparent electrodes having low resistance are formed or active elements such as TFTs are formed on the flexible substrate, the flexible substrate can hold high impact resistance thereof and hence, it is possible to apply the flexible flat panel display to various uses. Further, in the manufacturing step of a flat panel display using the flexible substrate, there is no possibility that the flexible substrate is damaged.

In the flexible substrate according to the present invention, it is preferable that impact resistance is as high as possible. Accordingly, it is more preferable that the flexible substrate is formed of a flexible substrate which is not broken even when an impact of 3mNm is applied to the flexible substrate in the vertical direction after applying the heat treatment to the flexible substrate at a temperature of 350°C in air. It is still more preferable that the flexible substrate is formed of a flexible substrate which is not broken even when an impact of 30mNm is applied to the flexible substrate in the vertical direction after applying the heat treatment to the flexible substrate at a temperature of 350°C in air.
Since the flexible substrate according to the present invention uses the polymer layer which contains polyorganosilsesquioxane as the main component and exhibits excellent flexibility, the flexible substrate can possess excellent impact resistance and hence, the flexible substrate becomes a flexible substrate which can sufficiently resist such impact forces as described above.

In the coating liquid according to the present invention, the coating liquid may contain polyorganosilsesquioxane as a main component.
Accordingly, the coating liquid according to the present invention may be preferably used as a raw material for manufacturing the polymer layer of the flexible substrate having such excellent properties as described above.
Here, preferred modes of the coating liquid according to the present invention are those which are explained in conjunction with the flexible substrate of the present invention.

As has been described heretofore, the flexible substrate according to the present invention possesses excellent heat resistance in addition to excellent flexibility, excellent impact resistance and excellent gas barrier properties and hence, the flexible substrate may be preferably used as a substrate of a display (a liquid crystal display or an organic EL display, for example) which is light-weighted and foldable.
Further, the coating liquid according to the present invention may be used for various uses including such an excellent flexible substrate.

### BRIEF EXPLANATION OF DRAWINGS

Fig. 1 is a view showing an infrared absorption spectrum of ladder-type polyorganosilsesquioxane.
Fig. 2 is a view schematically showing the structure of a flexible substrate 10 according to an embodiment 1.
Fig. 3 is a view showing light transmittance of the flexible substrate 10 of the embodiment 1.
Fig. 4 is a schematic view for explaining an impact resistance test method of the flexible substrate 10 of this embodiment 1.
Fig. 5 is a view showing results of impact resistance tests of the flexible substrate 10 of this embodiment 1.
Fig. 6 is a view schematically showing the structure of the flexible substrate 20 according to an embodiment 2.
Fig. 7 is a view showing the polystyrene conversion molecular weight distribution and infrared absorption spectrum of polyorganosilsesquioxane according to an example 1.
Fig. 8 is a view showing the polystyrene conversion molecular weight distribution and an infrared absorption spectrum of polyorganosilsesquioxane according to an example 2.
Fig. 9 is a view showing the polystyrene conversion molecular weight distribution and an infrared absorption spectrum of polyorganosilsesquioxane according to an example 3.
Fig. 10 is a view showing the polystyrene conversion molecular weight distribution and an infrared absorption spectrum of polyorganosilsesquioxane according to an example 4.
Fig. 11 is a view showing the structure of a conventional flexible substrate.

### BEST MODE FOR CARRYING OUT THE INVENTION

Hereinafter, in conjunction with embodiments of the present invention, the flexible substrate according to the present invention is explained in detail. However, it is needless to say that the technical scope of the present invention is not limited to the following description of the embodiments of the present invention.

### [Embodiment 1]

Fig. 2 is a view schematically showing the structure of the flexible substrate 10 according to an embodiment 1. The flexible substrate 10 according to the embodiment 1 is, as shown in Fig. 2, a substrate formed of a stacked body which is constituted of an inorganic glass layer 110 and polymer layers 120A, 120B which contain ladder-type polyorganosilsesquioxane as a main component. The polymer layers 120A, 120B are formed on both surfaces of the inorganic glass layer 110. Here, in Fig. 2, to facilitate the understanding of the structure, the inorganic glass layer 110 and the polymer layers 120A, 120B are shown in a state that the inorganic glass layer 110 and the polymer layers 120A, 120B are partially peeled off.

The flexible substrate of this embodiment 1 is formed by a following method.
First of all, a mixed solution of phenyltrimethoxysilane and 3-mercaptpropyltrimethoxysilane is subject to hydrolysis and dehydration condensation thus producing ladder-type polyorganosilsesquioxane (a weight average molecular weight in polystyrene conversion: Mw=19512).
Next, by dissolving 20 parts by weight of polyorganosilsesquioxane into 80 parts by weight of γ-butyrolactone, a coating liquid is prepared.

Next, the coating liquid is applied by using the spinner method to one surface of a borosilicate glass substrate (inorganic glass layer) having a square shape with a lateral size of 40mm and a longitudinal size of 40mm and a thickness of 50µm and is dried for 30 minutes using a dryer at a temperature of 80°C. Next, the same coating liquid is applied by using the spinner method to another surface of the borosilicate glass substrate and is dried for another 30 minutes using a dryer at a temperature of 80°C.
Next, by performing heat treatment at a temperature of 400°C for 30 minutes using an electric furnace, the flexible substrate 10 according to the embodiment 1 is formed. The film thicknesses of the polymer layers 120A, 120B are 1.5µm respectively.

With respect to the flexible substrate 10 according to the embodiment 1 which is obtained in this manner, as a polymer layer, the polymer layers 120A, 120B which contain ladder-type polyorganosilsesquioxane as the main component and exhibit excellent heat resistance are used and hence, the flexible substrate 10 can obtain excellent heat resistance. Further, the flexible substrate 10 adopts the structure in which the polymer layers 120A, 120B containing ladder-type polyorganosilsesquioxane as the main component and exhibit excellent flexibility are stacked on the inorganic glass layer 110 and hence, the flexible substrate 10 can obtain excellent flexibility and excellent impact resistance. Further, the inorganic glass layer 110 which originally has high gas barrier properties is used as a base substrate of the flexible substrate and hence, the flexible substrate 10 can exhibit excellent gas barrier properties.
Accordingly, the flexible substrate 10 of the embodiment 1 is formed into a flexible substrate which also possesses, in addition to excellent flexibility, excellent impact resistance, excellent gas barrier properties and excellent heat resistance.

The flexible substrate 10 of the embodiment 1 possesses heat resistance against a temperature of 350°C or more. Accordingly, in the manufacturing process of the flexible flat panel display, it is possible to form transparent electrodes having low resistance or to form active elements such as TFTs on the flexible substrate and hence, the quality of the flexible flat panel display may be enhanced.

In the flexible substrate 10 of the embodiment 1, after performing the heat treatment at a temperature of 350°C in air, light transmittance in a wavelength region ranging from 400nm to 800nm is 90% or more and hence, the flexible substrate 10 exhibits excellent light transmittance.

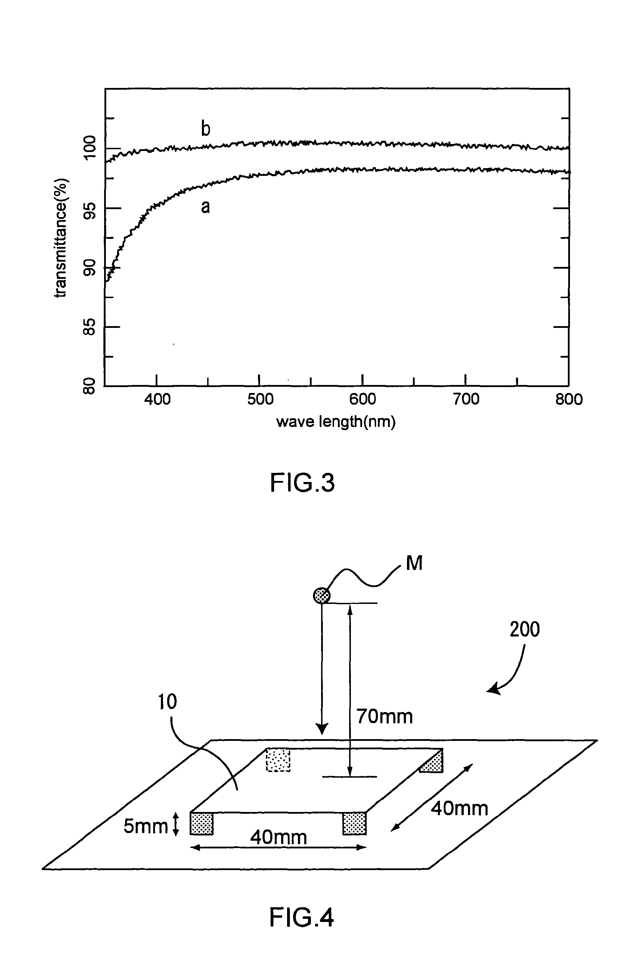

Fig. 3 is a view showing the light transmittance of the flexible substrate 10 of the embodiment 1. In Fig. 3, a transmittance curve indicated by symbol "a" is a transmittance curve of the flexible substrate 10 of the embodiment 1 and a transmittance curve indicated by symbol "b" is a transmittance curve of borosilicate glass. As shown in Fig. 3, in the flexible substrate 10 of this embodiment 1, after performing the heat treatment at a temperature of 350°C in air, light transmittance in a wavelength region ranging from 400nm to 800nm is 90% or more.
Accordingly, in the process of manufacturing the flexible flat panel display, even when transparent electrodes having low resistance are formed or active elements such as TFTs are formed on the flexible substrate, it is possible to allow the flexible substrate to hold high light transmittance without lowering the light transmittance thereof and hence, there is no possibility that display quality of the flexible flat panel display is lowered.

The flexible substrate 10 of the embodiment 1, after performing the heat treatment at a temperature of 350°C in air, is not broken even when an impact of 0.3mNm is applied to the flexible substrate in the vertical direction and hence, the flexible substrate 10 exhibits excellent impact resistance.
Accordingly, in the process of manufacturing the flexible flat panel display, even when transparent electrodes having low resistance are formed or active elements such as TFTs are formed on the flexible substrate, it is possible to allow the flexible substrate to hold high impact resistance without lowering the impact resistance thereof. Accordingly, it is possible to apply the flexible flat panel display to various uses. Further, in the manufacturing step of a flat panel display using this flexible substrate, there is no possibility that the flexible substrate is damaged.

An impact resistance test of the flexible substrate 10 of the embodiment 1 is performed using a method shown in Fig. 4. Fig. 4 is a schematic view for explaining the impact resistance test method of the flexible substrate 10 of the embodiment 1.
In this impact resistance test method, impact resistance which the flexible substrate receives when a force is applied to the flexible substrate in the direction perpendicular to the substrate surface is evaluated. In other words, the largest impact force which the flexible substrate is considered to withstand when the flexible substrate is used as the substrate for display is evaluated. That is, the flexible substrate 10 (40mmx40mm) is placed on a sample base (support portions being arranged at four corners of a square having each side of 40mm) of a test equipment 200 shown in Fig. 4 and a zirconia ball M having a predetermined weight is freely fallen from a predetermined height and an impact force (unit: mNm) is measured and impact resistance is evaluated.
The evaluation of impact force is performed by applying the impact forces at 4 levels in total which are obtained by changing a mass of the zirconia ball M at 2 levels (0.3118g, 0.4873g) and a predetermined height of the zirconia ball M for free fall at 2 levels (70mm, 140mm) to the flexible substrate.

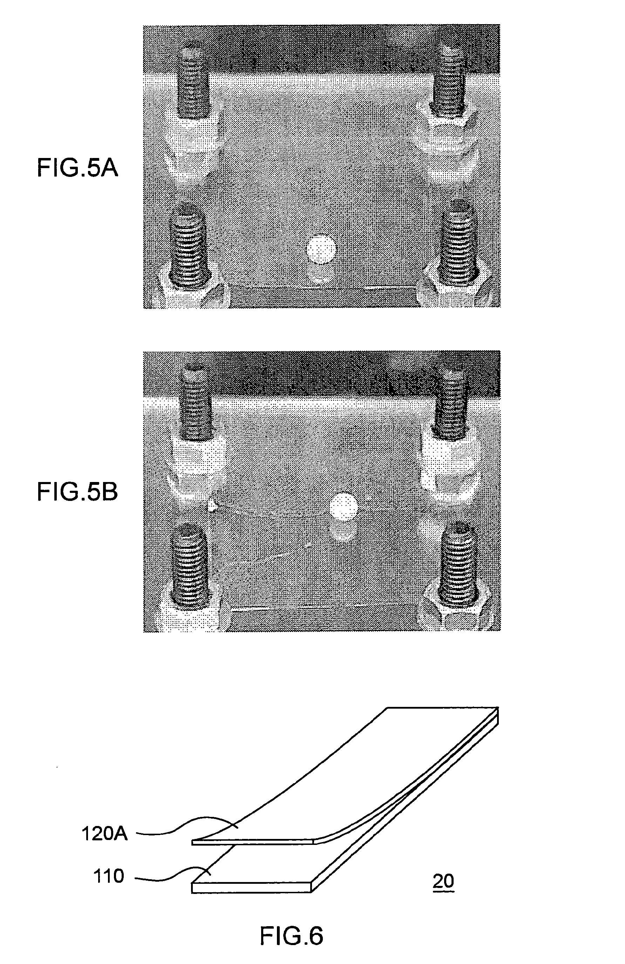

Fig. 5 is a view showing results of the impact resistance tests of the flexible substrate 10 of the embodiment 1. Fig. 5(a) is a view which shows a result of the impact resistance test with respect to the flexible substrate 10 of the embodiment 1 and Fig. 5(b) is a view which shows a result of the impact resistance test with respect to an inorganic glass layer 110 which is made of borosilicate glass having a thickness of 50µm used in the embodiment 1. The impact forces in this test are set to 2.1×10⁻⁴Nm(=0.21mNm) in both cases shown in Fig. 5(a) and Fig. 5(b).
As can be clearly understood from Fig. 5, it is found that the flexible substrate 10 of the embodiment 1 possesses excellent impact resistance property.

### [Embodiment 2]

Fig. 6 is a view schematically showing the structure of a flexible substrate 20 of an embodiment 2. The flexible substrate 20 of the embodiment 2 is, as shown in Fig. 6, a substrate made of a stacked body which is constituted of an inorganic glass layer 110 and a polymer layer 120A which contains ladder-type polyorganosilsesquioxane as a main component. The polymer layer is, different from the embodiment 1, formed on only one surface of the inorganic glass layer 110. Except for this point, the flexible substrate 20 of the embodiment 2 is exactly as same as the flexible substrate 10 of the embodiment 1.

In this manner, the flexible substrate 20 of the embodiment 2 differs from the flexible substrate 10 of the embodiment 1 in that the polymer layer 120A which contains ladder-type polyorganosilsesquioxane as the main component is formed only on one surface of the inorganic glass layer 110. However, in the same manner as the flexible substrate 10 of the embodiment 1, since the polymer layer 120A which contains ladder-type polyorganosilsesquioxane as the main component and exhibits excellent heat resistance is used as a polymer layer, it is possible to obtain excellent heat resistance. Further, since the flexible substrate 20 of the embodiment 2 has the structure in which the polymer layer 120A which contains ladder-type polyorganosilsesquioxane as the main component and exhibits excellent flexibility is stacked on the inorganic glass layer 110, it is possible to obtain excellent flexibility and excellent impact resistance. Further, since the inorganic glass layer 110 which originally possesses excellent gas barrier properties is used as a base substrate of the flexible substrate, it is possible to obtain excellent gas barrier properties.
Accordingly, the flexible substrate 20 of the embodiment 2 is formed into, in the same manner as the flexible substrate 10 of the embodiment 1, a flexible substrate which possesses excellent heat resistance in addition to excellent flexibility, excellent impact resistance and excellent gas barrier properties.

### EXAMPLES

Hereinafter, advantageous effects of the flexible substrate according to the present invention are explained in conjunction with examples.

The evaluation of the flexible substrate is performed as follows.
(1) Flexibility
A flexible substrate having a rectangular shape with a lateral size of 40mm and a longitudinal size of 20mm is gradually bent in a state that a center portion of the flexible substrate is pushed toward an opening portion which has an opening width of 14mm at a speed of 0.05mm per second and a radius of curvature immediately before the breaking occurs is measured as a limit radius of curvature (unit: mm). The smaller this value, the flexible substrate exhibits more excellent flexibility.

### (2) Impact resistance

A flexible substrate having a square shape with a lateral size of 40mm and a longitudinal size of 40mm is put in an electronic furnace at a temperature of 350°C and is left in the furnace for 30 minutes. Thereafter, an impact force (unit: mNm) is measured using a test equipment 200 shown in Fig. 4, and a result is evaluated in accordance with following standards.
EX (excellent) : The flexible substrate is not broken even with an impact force of 0.7mNm.
G (good) : The flexible substrate is not broken even with an impact force of 0.3mNm.
B (bad) : The flexible substrate is broken with an impact force of 0.3mNm.

### (3) Gas barrier properties

Gas barrier properties are evaluated in accordance with following standards.
EX (excellent): The flexible substrate exhibits excellent gas barrier properties.
B (bad) : The flexible substrate does not exhibit excellent gas barrier properties.

### (4) Heat resistance

A flexible substrate is placed in the electric furnace at a temperature of 300°C to 400°C and is left in the electric furnace for 30 minutes. Thereafter, the flexible substrate is taken out from the electric furnace and the evaluation is performed by observing appearance of the flexible substrate. The result is evaluated in accordance with following standards.
EX (excellent) : Neither discoloration nor deformation is observed at all. Further, no cracks are observed on the surface at all. Still further, no deterioration of film quality is observed at all.
Ga (Good): Neither discoloration nor deformation is observed at all. Further, no deterioration of film quality is observed at all. However, with respect to cracks on the surface, although substantially no cracks are observed at a temperature of 300°C, cracks are observed sometimes when the temperature exceeds 350°C.
Gb(Good): Neither discoloration or deformation is ob served at all. Further, no cracks on the surface are observed at all. However, with respect to the film quality, although substantially no deterioration of film quality is observed at a temperature of 300°C, the deterioration of film quality is observed sometimes when the temperature exceeds 350°C.
B(bad): Apparent discoloration and deformation are observed.

### (5) Light transmittance

A flexible substrate is placed in the electric furnace at a temperature of 350°C and is left in the electric furnace for 30 minutes. Thereafter, light transmittances (unit: %) at 400nm and at 600nm are measured using an ultraviolet visible absorption spectrum measuring device. The larger this value, the flexible substrate exhibits the more excellent transparency. is.

### [Example 1]

The flexible substrate according to an example 1 is manufactured in the following manner.
First of all, a mixed solution of phenyltrimethoxysilane and 3-mercaptpropyltrimethoxysilane is subject to hydrolysis and dehydration condensation so as to form ladder-type polyorganosilsesquioxane.

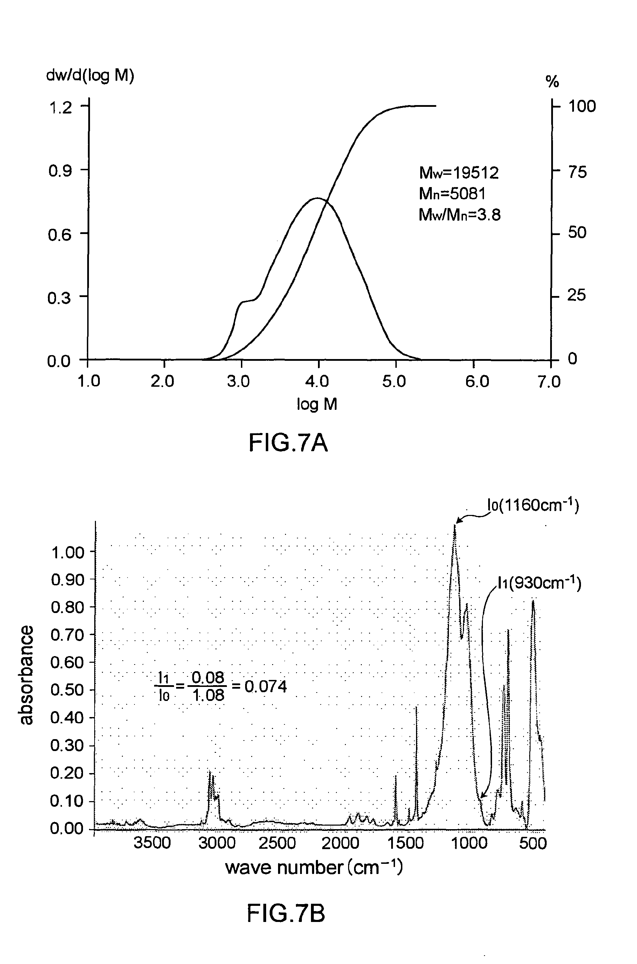

Fig. 7 is a view showing the molecular weight distribution in polystyrene conversion and an infrared absorption spectrum of above-mentioned ladder-type polyorganosilsesquioxane according to the example 1. The weight average molecular weight Mw of ladder-type polyorganosilsesquioxane in polystyrene conversion is, as shown in Fig. 7(a), 19512. Further, in the infrared absorption spectrum of ladder-type polyorganosilsesquioxane, a ratio of absorption intensity (IR intensity ratio) of an absorption band based on Si-OH bonds which are observed in the region of 830cm⁻¹ to 930cm⁻¹ with respect to absorption intensity of an absorption band which exhibits the largest absorption among absorption bands based on Si-O bonds which are observed in the region of 1000cm⁻¹ to 1200cm⁻¹ is, as shown in Fig. 7(b), 0.074.

Next, by dissolving 20 parts by weight of ladder-type polyorganosilsesquioxane into 80 parts by weight of γ-butyrolactone, the coating liquid is prepared.
Next, this coating liquid is applied by using the spinner method to one surfaces of borosilicate glass substrates having a thickness of 50µm which constitutes inorganic glass layers (a borosilicate glass substrate having a square shape with a lateral size of 40mm and a longitudinal size of 40mm and a borosilicate glass substrate having a rectangular shape with a lateral size of 40mm and a longitudinal size of 20mm) and is dried for 30 minutes using a dryer at a temperature of 80°C. Next, the same coating liquid is further applied by using the spinner method to another surfaces of the borosilicate glass substrates and is further dried for 30 minutes using the dryer at a temperature of 80 °C.
Next, by performing heat treatment at 400°C for 30 minutes using the electric furnace, the flexible substrate of the example 1 is produced. The film thicknesses of the polymer layers are 1.5µm respectively.

A thickness, a weight average molecular weight of ladder-type polyorganosilsesquioxane in polystyrene conversion, the IR intensity ratio of ladder-type polyorganosilsesquioxane, flexibility, impact resistance, gas barrier properties, heat resistance and light transmittance of the obtained flexible substrate are shown in Table 1. Here, the molecular weight is measured using a GPC.

### [Example 2]

A mixed solution of phenyltrimethoxysilane, methyltrimethoxysilane and 3-mercaptpropyltrimethoxysilane is subject to hydrolysis and dehydration condensation so as to form ladder-type polyorganosilsesquioxane.

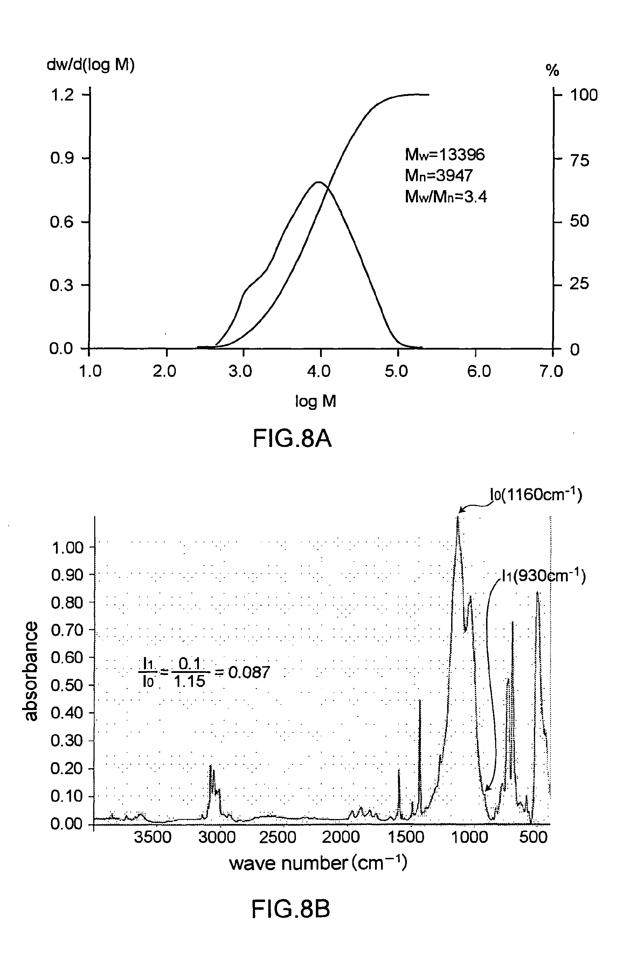

Fig. 8 is a view showing the molecular weight distribution in polystyrene conversion and an infrared absorption spectrum of ladder-type polyorganosilsesquioxane of an example 2. The weight average molecular weight Mw of ladder-type polyorganosilsesquioxane in polystyrene conversion is, as shown in Fig. 8 (a), 13396. Further, in the infrared absorption spectrum of ladder-type polyorganosilsesquioxane, the IR intensity ratio is, as shown in Fig. 8(b), 0.087.

Next, the coating liquid is prepared by dissolving 20 parts by weight of ladder-type polyorganosilsesquioxane into 80 parts by weight of γ-butyrolactone. By performing steps which follow this step in the same manner as the corresponding steps in the example 1, the flexible substrate of the example 2 is produced. The film thicknesses of the polymer layers are 1.5µm respectively.

A thickness, a weight average molecular weight in polystyrene conversion of ladder-type polyorganosilsesquioxane, an IR intensity ratio of ladder-type polyorganosilsesquioxane, flexibility, impact resistance, gas barrier properties, the heat resistance and light transmittance of the obtained flexible substrate are shown in Table 1.

### [Example 3]

A mixed solution of phenyltrimethoxysilane, methyltrimethoxysilane and 3-mercaptpropyltrimethoxysilane is subject to hydrolysis and dehydration condensation under a lean concentration condition compared to the condition of the example 2 so as to form ladder-type polyorganosilsesquioxane having a molecular weight lower than the molecular weight of ladder-type polyorganosilsesquioxane in the example 2.

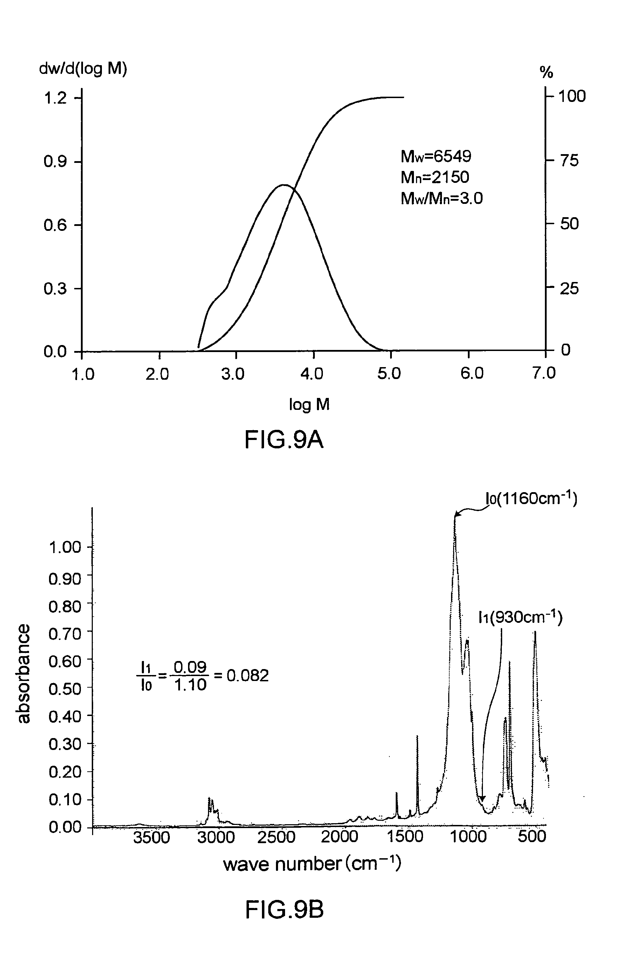

Fig. 9 is a view showing the molecular weight distribution in polystyrene conversion and an infrared absorption spectrum of ladder-type polyorganosilsesquioxane of an example 3. The weight average molecular weight Mw of ladder-type polyorganosilsesquioxane in polystyrene conversion is, as shown in Fig. 9(a), 6549. Further, in the infrared absorption spectrum of ladder-type polyorganosilsesquioxane, an IR intensity ratio is 0.082 as shown in Fig. 9(b).

Next, by dissolving 20 parts by weight of ladder-type polyorganosilsesquioxane into 80 parts by weight of γ-butyrolactone, the coating liquid is prepared. By performing steps which follow this step in the same manner as the corresponding steps in the example 1, the flexible substrate of the example 3 is produced. The film thicknesses of the polymer layers are 1.5µm respectively.

A thickness, a weight average molecular weight of ladder-type polyorganosilsesquioxane in polystyrene conversion, an IR intensity ratio of ladder-type polyorganosilsesquioxane, flexibility, impact resistance, gas barrier properties, heat resistance and light transmittance of the obtained flexible substrate are shown in Table 1.

### [Example 4]

By dissolving 20 parts by weight of ladder-type polyorganosilsesquioxane (GR-100) obtained from Techneglas, Inc. (USA) into 80 parts by weight of γ-butyrolactone, the coating liquid is prepared.

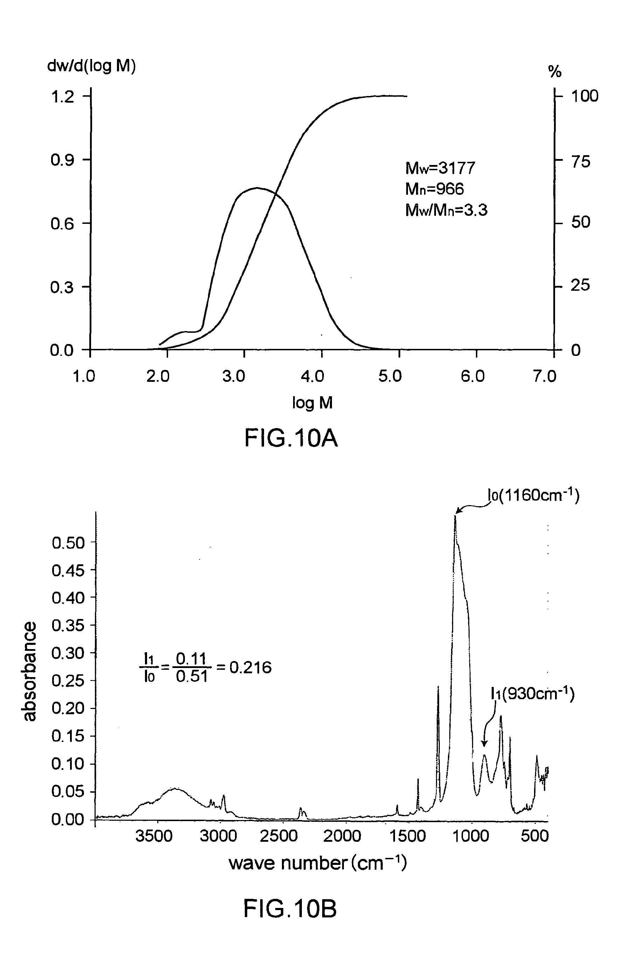

Fig. 10 is a view showing a molecular weight distribution in polystyrene conversion and an infrared absorption spectrum of ladder-type polyorganosilsesquioxane according to an example 4. A weight average molecular weight Mw of ladder-type polyorganosilsesquioxane in polystyrene conversion is, as shown in Fig. 10 (a), 3177. Further, in an infrared absorption spectrum of ladder-type polyorganosilsesquioxane, an IR intensity ratio is, as shown in Fig. 10(b), 0.216.

Next, by dissolving 20 parts by weight of ladder-type polyorganosilsesquioxane into 80 parts by weight of γ-butyrolactone, the coating liquid is prepared. By performing steps which follow this step in the same manner as the corresponding steps in the example 1, the flexible substrate of the example 4 is produced. The film thicknesses of the polymer layers are 1.5µm respectively.

A thickness, a weight average molecular weight of ladder-type polyorganosilsesquioxane in polystyrene conversion, an IR intensity ratio of ladder-type polyorganosilsesquioxane, flexibility, impact resistance, gas barrier properties, heat resistance and light transmittance of the obtained flexible substrate are shown in Table 1.

### [Example 5]

By dissolving 25 parts by weight of ladder-type polyorganosilsesquioxane formed in the example 2 and 1 part by weight of acrylic resin (A-DCP Shin-Nakamura Chemical Co., Ltd) into 74 parts by weight of γ-butyrolactone, the coating liquid is prepared. By performing steps which follow this step in the same manner as the corresponding steps in the example 1, the flexible substrate of an example 5 is produced. The film thicknesses of the polymer layers are 6µm respectively.

A thickness, flexibility, impact resistance, gas barrier properties, heat resistance and light transmittance of the obtained flexible substrate are shown in Table 1.

### [Example 6]

By dissolving 50 parts by weight of ladder-type polyorganosilsesquioxane formed in the example 3 and 50 parts by weight of heat-resistance silicone resin (TSR-144 GE Toshiba Silicones Co., Ltd.) into γ-butyrolactone, the coating liquid is prepared. By performing steps which follow this step in the same manner as the corresponding steps in the example 1, the flexible substrate of an example 6 is produced. The film thicknesses of the polymer layers are 15µm respectively.

A thickness, flexibility, impact resistance, gas barrier properties, heat resistance and light transmittance of the obtained flexible substrate are shown in Table 1.

### [Example 7]

By dissolving 60 parts by weight of ladder-type polyorganosilsesquioxane formed in the example 3 and 40 parts by weight of colloidal silica (NanoTek (registered trademark) Slurry C. I. Kasei. Co., Ltd.) into γ-butyrolactone, the coating liquid is prepared. By performing steps which follow this step in the same manner as the corresponding steps in the example 1, the flexible substrate of an example 7 is produced. The film thicknesses of the polymer layers are 8µm respectively.

A thickness, flexibility, impact resistance, gas barrier properties, heat resistance and light transmittance of the obtained flexible substrate are shown in Table 1.

### [Example 8]

By dissolving 60 parts by weight of ladder-type polyorganosilsesquioxane formed in the example 3 and 40 parts by weight of ladder-type polyorganosilsesquioxane (GR-100) obtained from Techneglas, Inc. (USA) into y-butyrolactone, the coating liquid is prepared. By performing steps which follow this step in the same manner as the corresponding steps in the example 1, the flexible substrate of an example 8 is produced. The film thicknesses of the polymer layers are 7µm respectively.

A thickness, flexibility, impact resistance, gas barrier properties, heat resistance and light transmittance of the obtained flexible substrate are shown in Table 1.

### [Comparison example 1]

Borosilicate glass substrates having a thickness of 50µm (a borosilicate glass substrate having a square shape with a lateral size of 40mm and a longitudinal size of 40mm and a borosilicate glass substrate having a rectangular shape with a lateral size of 40mm and a longitudinal size of 20mm) are used as flexible substrates of a comparison example 1. A thickness, flexibility, impact resistance, gas barrier properties, heat resistance and light transmittance of these borosilicate glass substrates are shown in Table 1.

### [Comparison example 2]

By dissolving 1 part by weight of polyvinyl pyrrolidone (a weight average molecular weight: 360000) into 99 parts by weight of dimethyl formamide, the coating liquid is prepared. By performing steps which follow this step in the same manner as the corresponding steps in the example 1, the flexible substrate of a comparison example 2 is formed. The film thicknesses of the polymer layers are 3µm respectively.
A thickness, flexibility, impact resistance, gas barrier properties, heat resistance and light transmittance of the obtained flexible substrate are shown in Table 1.

**[Table 1]**

| | thickness (µm) | molecular weight Mw | IR intensity ratio | flexibility limit curvature radius (mm) | impact resistance | gas barrier properties | heat resistance | light transmittance (%) | |
|---|---|---|---|---|---|---|---|---|---|
| | | | | | | | | 400nm | 600nm |
| example 1 | 53 | 19512 | 0.074 | 6 | G | EX | EX | 96 | 99 |
| example 2 | 53 | 13396 | 0.087 | 6 | G | EX | EX | 96 | 99 |
| example 3 | 53 | 6549 | 0.082 | 6 | G | EX | EX | 96 | 99 |
| example 4 | 53 | 3177 | 0.216 | 6 | G | EX | Ga | 96 | 99 |
| example 5 | 62 | - | - | 9 | EX | EX | Gb | 91 | 98 |
| example 6 | 80 | - | - | 9 | EX | EX | EX | 94 | 99 |
| example 7 | 66 | - | - | 9 | EX | EX | EX | 94 | 99 |
| example 8 | 64 | - | - | 9 | EX | EX | EX | 94 | 99 |
| comparison example 1 | 50 | - | - | 11 | B | EX | EX | 99 | 99 |
| comparison example 2 | 56 | - | - | 6 | G | EX | B | 48 | 84 |

As can be also understood from Table 1, it is found that the flexible substrates of the present invention (examples 1 to 8) exhibit excellent flexibility and excellent impact resistance compared to the flexible substrate of the comparison example 1. Further, it is also found that the flexible substrates of the present invention (examples 1 to 8) exhibit excellent heat resistance and high light transmittance compared to the flexible substrate of the comparison example 2.
It is also found that among the flexible substrates of the present invention, the flexible substrates of the examples 1 to 3 and 6 to 8 exhibit the further excellent heat resistance compared to the flexible substrates of the examples 4 and 5.

As has been described heretofore, the flexible substrates of the present invention possess excellent heat resistance in addition to excellent flexibility, excellent impact resistance and excellent gas barrier properties and hence, the flexible substrates of the present invention may be preferably used as a substrate of a light-weighted and foldable display (for example, a liquid crystal display or an organic EL display).
Still further, the coating liquid of the present invention may be preferably used in various applications including such excellent flexible substrates.

## Claims

1. A flexible substrate formed of a stacked body which is constituted of an inorganic glass layer and a polymer layer which contains polyorganosilsesquioxane as a main component.

2. A flexible substrate according to claim 1, wherein the polymer layer is a polymer layer which is manufactured by applying a coating liquid which contains polyorganosilsesquioxane as a main component to the inorganic glass layer and, thereafter, applying drying and heat treatment to the coating liquid.

3. A flexible substrate according to claim 2, wherein a weight average molecular weight of polyorganosilsesquioxane is set to a value which falls within a range of 1000 to 100000 as a weight average molecular weight (Mw) in polystyrene conversion.

4. A flexible substrate according to claim 2 or 3, wherein a ratio of an absorption intensity of an absorption band based on a Si-OH bond which is observed in a region ranging from 830cm⁻¹ to 930cm⁻¹ with respect to an absorption intensity of an absorption band having a largest absorbing ability among absorption bands based on a Si-O bond observed in a region ranging from 1000cm⁻¹ to 1200cm⁻¹ of an infrared absorption spectrum of polyorganosilsesquioxane which is contained in the coating liquid falls within a range of 0.01 to 0.2.

5. A flexible substrate according to any one of claims 2 to 4, wherein polyorganosilsesquioxane which is contained in the coating liquid is ladder-type polyorganosilsesquioxane.

6. A flexible substrate according to any one of claims 2 to 5, wherein polyorganosilsesquioxane which is contained in the coating liquid is a silicon oxide polymer which is obtained by applying hydrolysis and dehydration condensation to a solution which contains at least trifunctional silicon-containing alkoxide.

7. A flexible substrate according to any one of claims 2 to 6, wherein polyorganosilsesquioxane which is contained in the coating liquid is a silicon oxide polymer having at least one substituent out of an aryl group, an alkyl group and a substituent alkyl group.

8. A flexible substrate according to any one of claims 2 to 7, wherein the coating liquid is a coating liquid which further contains an organic resin and/or an organic low-molecular compound in addition to polyorganosilsesquioxane.

9. A flexible substrate according to any one of claims 2 to 8, wherein the coating liquid is a coating liquid which further contains a silicone resin in addition to polyorganosilsesquioxane.

10. A flexible substrate according to any one of claims 2 to 9, wherein the coating liquid is a coating liquid which further contains colloidal silica in addition to polyorganosilsesquioxane.

11. A flexible substrate according to any one of claims 1 to 10, wherein the polymer layer is formed on both surfaces of the inorganic glass layer.

12. A flexible substrate according to anyone of claims 1 to 11, wherein the flexible board has heat resistance of 350°C or more.

13. A flexible substrate according to any one of claims 1 to 12, wherein the flexible substrate possesses light transmittance of 90% or more in a wavelength band of 400nm to 800nm after heat treatment at a temperature of 350°C in air.

14. A flexible substrate according to any one of claims 1 to 13, wherein the flexible substrate is not broken even when an impact of 0.3mNm is applied to the flexible substrate in a direction perpendicular to the flexible substrate after heat treatment at a temperature of 350°C in air.

15. A coating liquid which contains polyorganosilsesquioxane as a main component thereof.
